# EUROPEAN PATENT SPECIFICATION

(11) **EP 0 983 409 B1**
(45) Date of publication and mention of the grant of the patent: **12.03.2003**
(21) Application number: 98925627.6
(22) Date of filing: 14.05.1998
(51) Int. Cl.: E04D 3/362, E04D 3/363

(54) **ELONGATE RETAINING ELEMENT FOR BUILDING SHEETS**
LÄNGLICHES BEFESTIGUNGSELEMENT FÜR PLATTEN
ELEMENT DE RETENUE ALLONGE POUR TOLES DE CONSTRUCTION

(30) Priority: 22.05.1997 NL 1006110
(43) Date of publication of application: 08.03.2000
(73) Proprietor: Corus Bausysteme GmbH, 56070 Koblenz (DE)
(72) Inventor: GEHLHAAR, Horst, D-56626 Andernach (DE); DÜRNBERGER, Dieter, D-56579 Rengsdorf (DE); SCHMITT, Horst, D-53539 Kelberg (DE); THIEBES, Robert, D-53557 Bad Hönningen (DE)
(74) Representative: Herman de Groot, Johan Willem
(86) International application number: EP9803002
(87) International publication number: WO98053158

(56) References cited:
- GB-A- 368 043
- GB-A- 2 167 101

## Description

### FIELD OF THE INVENTION

The invention according to the preamble of claim 1 relates to an elongate retaining element for engaging building sheets to retain them in place on a support structure of a building. Typically the retaining element has a head part engaging a shaped rib of the building sheet and a base which is to be fixed to the support structure by connecting elements, e.g. screws. The invention according to claim 10 further relates to an assembly of at least one such retaining element and at least one building sheet mounted thereby on a support structure.

### DESCRIPTION OF THE PRIOR ART

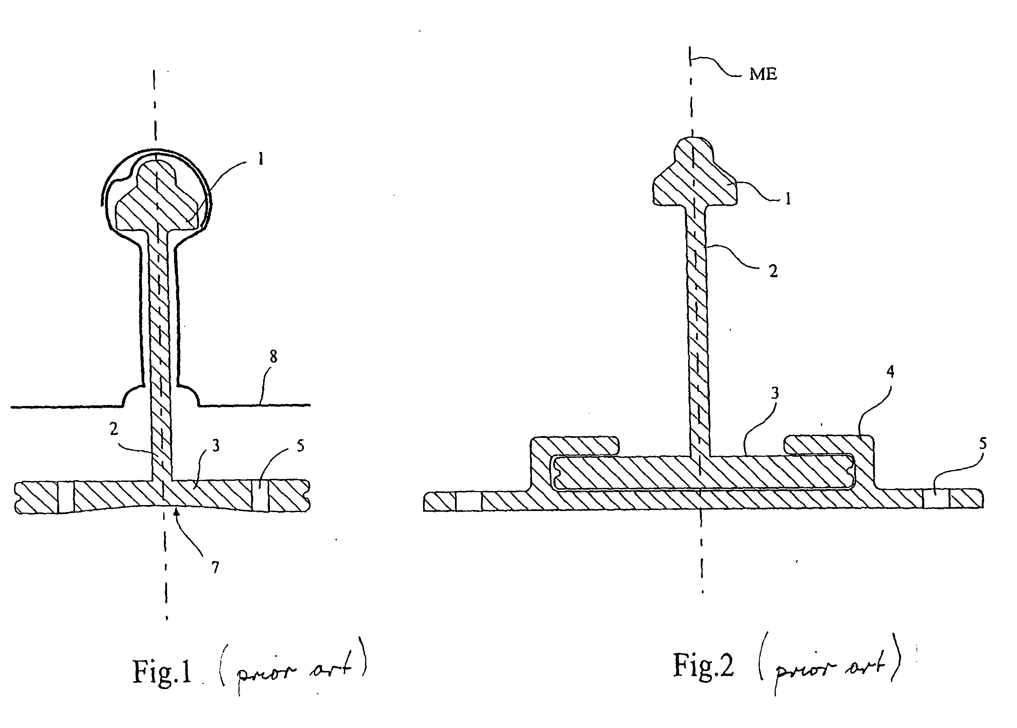

GB-A-2167101 discloses elongate retaining elements for mounting building sheets whose free ends are flanged into upstanding connecting ribs on a supporting structure of a building, such as for example supporting beams, T-bearers or similar structural elements manufactured from for example wood, steel, aluminium or concrete. One form of retaining element of this prior publication is illustrated in Fig. 1. It is manufactured in one part, e.g. as an aluminium extrusion, and can be connected to the support structure using connecting elements such as screws passed through drilled holes in its base. Another retaining element illustrated in GB-A-2167101 has a base of thermally insulating material such as thermoplastics acting as a spacer member. The base has centrally located holes for securing screws and at its upper side a wide recess with overhanging side flanges retaining a base part of the aluminium extrusion which has an upstanding web carrying the enlarged head which engages the building sheet. The extrusion is therefore longitudinally adjustable in the base but appears to be clamped by the overhanging side flanges. Another drawing shows the aluminium extrusion similarly retained on a base of aluminium which is itself retained on a spacer member of plastics material.

The fastening shown in US-A-368 043 has ball-joints which secure a freedom of motion in all directions parallel to the roof.

The arrangements shown in GB-A-2167101 do not fully deal with the disadvantages which arise in use when the effects of particularly the weather cause the building sheets to expand or contract, so that a high mechanical loading may act on the base of the retaining element and the connecting elements, e.g. screws. With an excessive mechanical loading or after a certain standing time under high dynamic loads the retaining element or the connecting screws can crack through or break off. Moreover, the building sheets sliding over the head part under the effect of a cyclic thermal expansion can cause an unpleasant noise as the metal parts slide over one another. A further disadvantage is that a high mechanical loading on the retaining element or the connecting screws is undesired where the retaining element is attached to a less usual and brittle support structure, such as for example insulating glass wool of a high density or foam glass, so that over time the join between the retaining element and the support structure no longer meets requirements.

### SUMMARY OF THE INVENTION

In order to remove or at least diminish these drawbacks, it is an object of the invention to improve the elongate retaining element in such a way that it can fulfil its function of supporting and connecting a building sheet or sheets to the support structure even where varying forces act, so that the join with the support structure continues to meet requirements. A further object of the invention is to reduce the risk of the occurrence of the unpleasant noise of the building sheets and the head part sliding over one another.

This problem is solved by the element of claim 1.

This achieves the effect of making possible a relative movement between the head part of the retaining element and the support structure, in the lateral direction of the retaining element and also in the longitudinal direction. Further, the connection of the connecting flange to the base permits rotation through a predetermined arc between end stop positions. This relative movement allows the join of the retaining element to the support structure to be considerably less mechanically loaded under the effect of cyclical thermal expansion of the sheet-like building elements. It also achieves the effect of reducing the occurrence of the unpleasant noise of metal parts sliding over one another.

An advantage therefore is that the retaining element may be used for fixing sheets to a brittle support structure of a type which is less usual in the construction industry.

To give symmetry to the element, the predetermined arc may be symmetrical with respect to a central plane of symmetry of the retaining element. The socket may have an open mouth extending over an arc between -α° and +α° with respect to a radial line joining the centre of rotation to the centre of the open mouth where α is not more than 15°.

As mentioned above, the connection of the connecting flange to the base permits also sliding longitudinal movement of the connecting flange relative to the base in the direction of elongation of the retaining element. This achieves the effect that in the joined state the retaining element is not only free to move rotationally but it can also make longitudinal movements, thereby further reducing the mechanical loading on the join to the foundation as a result of the thermal expansion. This embodiment is ideally suited to joining the retaining element to a brittle or a relatively soft and/or less strong foundation than is conventional.

Preferably the connection of the connecting flange to the base comprises means lubricating the relative movement of the connecting flange and the base. Particularly the lubricating means may be selected from
(a) a permanent lubricating coating on at least one of respective contact surfaces of the connecting flange and the base,
(b) an intermediate lubricating member between respective contact surfaces of the connecting flange and the base, and
(c) use of a self-lubricating metal to provide at least one of respective contact surfaces of the connecting flange and the base.

Reducing the coefficient of friction achieves the effect that the parts are able to move more easily relative to one another, thereby further reducing the loading on the support. It further achieves the effect of further reducing the chance of undesired noise as a result of metal parts sliding over one another. A lubricating coating based on for example oil or grease is possible, but over time these coatings can dry out so that the lubricating effect reduces. After the sheet-like building elements have been attached, the retaining elements are no longer easily accessible for applying a fresh layer of oil or grease. Various permanent lubricating coatings are available on the market which only need to be applied once on at least one contact surface for attaining a good lubricating action during the entire economic service life of the building element.

The head part may be provided with a permanent lubricating coating. This considerably reduces the friction between the head part and the building sheets and in turn this reduces the chance of the occurrence of the undesired noise of metal parts sliding over one another as a result of thermal expansion. A reduced friction further reduces the mechanical loading on the join with the support.

The head part may be hollow. This achieves the effect that when in operation a building sheet can be joined to the head part using joining elements such as screws or rivets. This stops the head part moving relative to the building sheet and thereby also stops the occurrence of undesired noise as a result of thermal expansion of the building sheets. Applying the permanent lubricating coating onto the head part may be omitted.

The base portion of the connecting flange may be hollow. This makes it possible, as the building sheets are being placed in position, to place means of positioning for the support element such as for example clamps manufactured from a plastics material.

Preferably the head part and the connecting flange on the one hand and the base of the element on the other are both an extruded section. An extruded section is simple and relatively inexpensive to manufacture.

The retaining element can be manufactured from a metal, and preferably aluminium, or from a plastics material. To a large extent the choice of the material depends on the circumstances of the case. Where high mechanical loading is expected, then metal is preferable, and aluminium in particular, because this metal is strong yet has a low density. Where mechanical loading is expected to be low, a suitable plastics material may be chosen because this is normally less expensive than metal and furthermore it does not need any lubricating coating because many suitable plastics possess self-lubricating properties. A combination of for example a plastics material support element and a metal retaining element is also possible. An advantage of this is the reduction of the occurrence of a so-called cold crack in the building structure. To avoid this problem a metal support element can be provided with a plastics material cap.

The dimensions in the longitudinal direction of the retaining element may also be varied to depend on the circumstances of the case. For instance, where the support to be used with is relatively soft or brittle, the base may be chosen to be longer relative to the connecting flange in order to obtain a lower pressure on the support.

### INTRODUCTION OF THE DRAWINGS

The invention will now be illustrated by several non-limitative embodiments, with reference to the accompanying drawings, in which:-
Fig. 1 (prior art) shows a known retaining element as described above, in cross-section, together with two building sheets with ribbed edges;
Fig. 2 (prior art) shows in cross-section an embodiment of the elongate retaining element in accordance with the invention;
Figs. 3a and 3b show cross-sections of another embodiment of the retaining element in accordance with the invention in dis-assembled and assembled state, and Fig. 3c shows a modified form of one component of the retaining element;
Fig. 4 shows in cross-section enlarged the base component of the embodiment in accordance with Fig. 3;
Fig. 5 shows a perspective view of part of the embodiment in accordance with Fig. 3.

### DESCRIPTION OF THE EMBODIMENTS

Fig. 1 shows schematically a retaining element in one part in accordance with the state of the art consisting of a symmetric head part 1, a connecting flange or web 2 and a base 3 symmetric relative to the central longitudinal plane (ME) of the connecting web 2, wherein the base part has a recess 7 underneath and is provided with holes for fixing means for joining it to a support structure, and wherein the head part 1 cooperates with edge ribs of two building sheets 8 to hold them.

Fig. 2 shows schematically a retaining element of the invention having one component consisting of a head part 1 and a connecting web 2 with a base portion 3 of flat shape symmetric relative to the central longitudinal plane (ME)of the connecting web 2. The second component is a support element or base 4, which is provided with fixing holes 5 in laterally projecting portions. The base 4 has a recess to receive the base portion 3 formed by upstanding flanges which overhang the base portion 3. Parallel-sided grooves, extending laterally, receive the correspondingly parallel-sided lateral portions of the flat base portion 3 with clearance. This type of join allows the connecting web 2 to move freely in its entirety in the longitudinal direction, without risk of jamming or wedging of the base portion 3 in the grooves, under the effect of for example thermal expansion of the building sheets. Consequently the mechanical loading on the support structure is reduced.

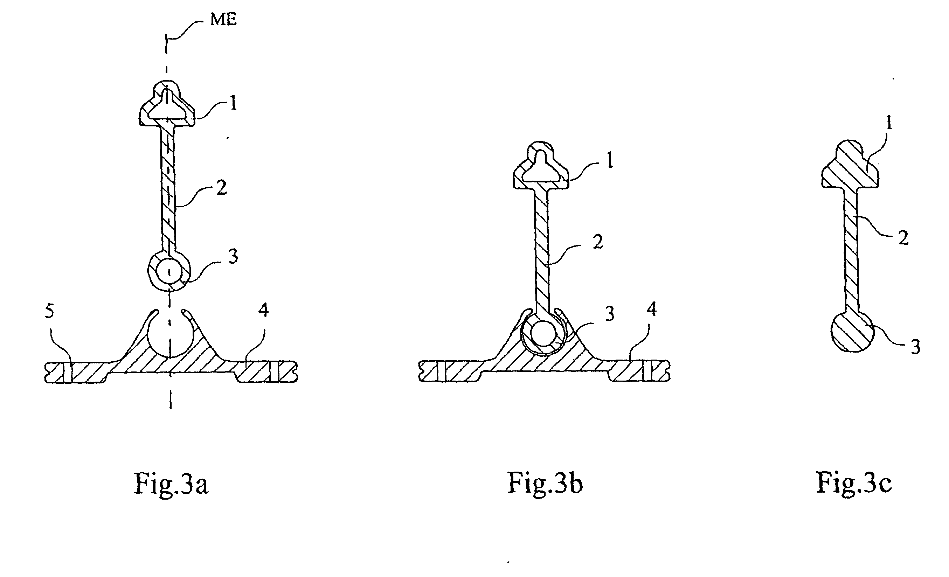

Fig. 3a shows a retaining element in accordance with the invention in which the web 2 and the base 4 are joined by a socket-type joint with a circular cross-section. The base portion of the web 2 is circular and symmetrical relative to the central longitudinal plane (ME) of the web 2, and the head part 1 is hollow. The hollow base portion of the web is received by a partially open circular-section socket of the base 4. These parts are assembled as shown in Fig. 3b. The component 1, 2, 3 can slidingly rotate about a longitudinal axis between end stop positions and slide longitudinally relative to the fixed base 4. Fig. 3c shows a variation in which head part 1 and web 2 of the retaining element in accordance with the invention have a solid cross-section.

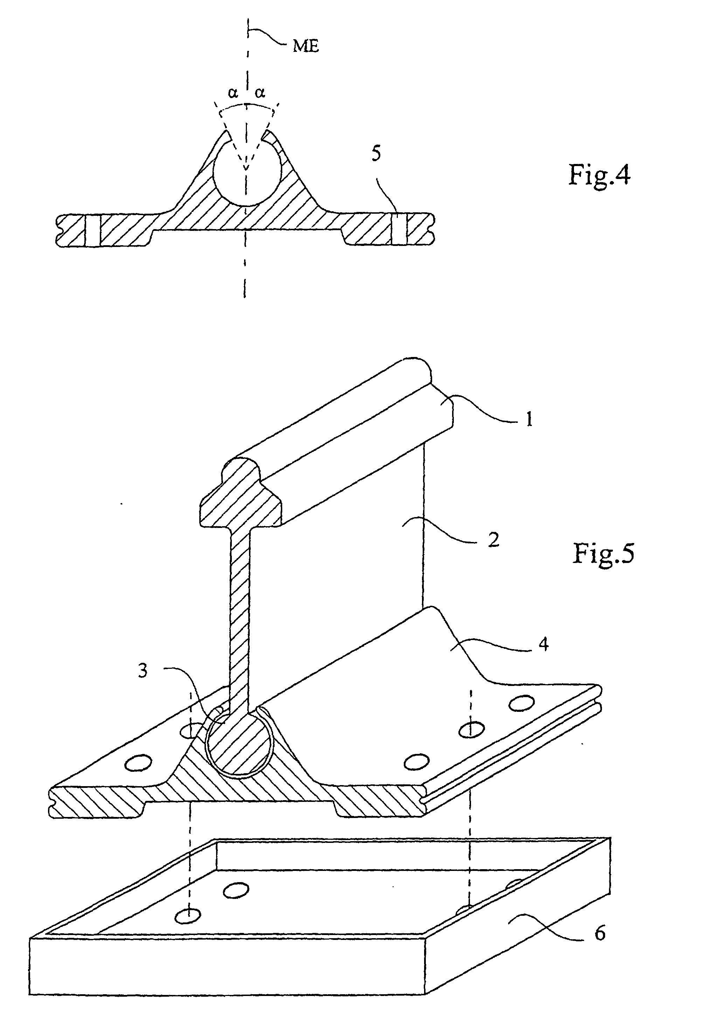

Fig. 4 shows schematically the base 4 from Fig. 3a and Fig. 3b, and shows that the open mouth of the circular-section socket extends over an arc, with respect to a radial line between the centre of the mouth and the centre of rotation of the round base portion, through an angle from -α° to +α°. The web 2 can thus rotate between defined end stop positions. This small rotation is in addition to the free movement in the longitudinal direction. Preferably α is in a range of up to approximately 15° and more preferably α is no more than 10°.

Fig. 5 shows schematically a perspective view of the embodiment in accordance with Fig. 3, wherein additionally between the support structure and base 4 a plastics tray 6 is fitted to prevent or at least reduce risk of a cold crack during operation.

## Claims

1. An elongate retaining element for building sheets, comprising a moveable component (1, 2, 3) and a base (4) for mounting the retaining element on a support structure, the moveable component comprising, as seen in cross-section perpendicular to its direction of elongation, a head part (1) for engaging at least one said building sheet, a connecting flange (2), and a base portion (3), said connection flange (2) extending upward from said base (4) and joining said head part (1) to said base (4), said base portion (3) connecting said flange (2) to said base (4) and permitting a longitudinal movement of said flange and said head part relative to said base in the direction of elongation of the retaining element and a rotation of said flange and said head part relative to said base about an axis parallel to said direction of elongation of the retaining element, **characterised in that** said head part (1), said connecting flange (2) and said base portion (3) form a single element, and said base (4) has a socket for receiving said base portion (3), said base portion and said socket both being of part-circular shape as seen in cross-section perpendicular to the direction of elongation of the retaining element, and said base portion (3) permitting a free sliding longitudinal movement of said connecting flange (2) relative to said base (4) in the direction of elongation of the retaining element and a rotation through a predetermined arc between end stop positions of said connecting flange in said socket of said base (4).

2. An elongate retaining element according to claim 1, wherein said socket has an open mouth extending over an arc between -α° and +α° with respect to a radial line joining the centre of rotation to the centre of said open mouth where α is not more than 15°.

3. An elongate retaining element according to claim 1 or 2, wherein said predetermined arc is symmetrical with respect to a central plane symmetry of the retaining element.

4. An elongate retaining element according to any one of claims 1 to 3, wherein the connection of said connecting flange (2) to said base (4) via said base portion (3) comprises means lubricating the relative movement of said connecting flange (2) and said base (4).

5. An elongate retaining element according to claim 4, wherein said lubricating means is selected from
(a) permanent lubricating coating on at least one of respective contact surfaces of said connecting flange (2) and said base (4),
(b) an intermediate lubricating member between respective contact surfaces of said connecting flange (2) and said base (4), and
(c) use of a self-lubricating metal to provide at least one of respective contact surfaces of said connecting flange (2) and said base (4).

6. An elongate retaining element according to any one of claims 1 to 5, wherein said head part (1) has a hollow cross-section.

7. An elongate retaining element according to any one of claims 1 to 6, wherein said base portion (3) of said connecting flange (2) has a hollow cross-section.

8. An elongate retaining element according to any one of claims 1 to 7, wherein said single element (1,2,3) is an extruded element.

9. An elongate retaining element according to any one of claims 1 to 8, wherein said base (4) is an extruded element.

10. An assembly comprising at least one building sheet and at least one elongate retaining element according to any one of claims 1 to 9 engaging said building sheet to retain it on a support structure.

## Patentansprüche

1. Längliches Befestigungselement für Bauplatten, welches ein bewegliches Element (1, 2, 3) und einen Fuß (4) zur Anbringung des Befestigungselements auf einer Tragkonstruktion aufweist, wobei das bewegliche Element im Querschnitt quer zu seiner Ausdehnungsrichtung ein Kopfteil (1) für den Eingriff von mindestens einer Bauplatte, einen Verbindungsflansch (2) und ein Unterteil (1) umfasst und wobei sich der Verbindungsflansch (2) von dem Fuß (4) aus nach oben erstreckt und das Kopfteil (1) mit dem Fuß (4) verbindet, wobei das Unterteil (3) den Flansch (2) mit dem Fußteil verbindet und eine Bewegung in Längsrichtung des Flansches und des Kopfteils relativ zu dem Fuß in der Ausdehnungsrichtung des Befestigungselements sowie eine Drehbewegung, des Flansches und des Kopfteils relativ zu dem Fußteil um eine parallel zu der Ausdehnungsrichtung des Befestigungselements verlaufende Achse ermöglicht, **dadurch gekennzeichnet, dass** das Kopfteil (1), der Verbindungsflansch (2) und das Unterteil (3) ein einziges Element bilden, und dass das Fußteil (4) eine Fassung zur Aufnahme des Unterteils (3) aufweist, wobei das Unterteil und die Fassung beide im Querschnitt senkrecht zur Ausdehnungsrichtung des Befestigungselements eine teilweise runde Form aufweisen, und wobei das Unterteil (3) eine ungehinderte Gleitbewegung in Längsrichtung des Verbindungsflansches (2) relativ zum Fuß in Ausdehnungsrichtung des Befestigungselements sowie eine Drehbewegung über einen vorgegebenen Kreisbogen zwischen Endanschlags-Positionen des Verbindungsflansches in der Fassung des Fußes (4) ermöglicht.

2. Längliches Befestigungselement nach Anspruch 1, bei welchem die Fassung eine offene Mündung aufweist, die sich über einen Kreisbogen zwischen -α° und + α° bezüglich einer radial verlaufenden Linie erstreckt, welche den Drehmittelpunkt mit dem Mittelpunkt der offenen Mündung verbindet, wobei α einen Wert von höchstens 15° aufweist.

3. Längliches Befestigungselement nach Anspruch 1 oder 2, bei welchem der vorgegebene Kreisbogen bezüglich einer in der Mitte liegenden Symmetrieebene des Befestigungselements symmetrisch ist.

4. Längliches Befestigungselement nach einem der Ansprüche 1 bis 3, bei welchem die Verbindung des Verbindungsflansches (2) mit dem Fuß (4) über das Unterteil (3) eine Einrichtung zum Schmieren für die relative Bewegung des Verbindungsflansches (2) und des Fußes (4) aufweist.

5. Längliches Befestigungselement nach Anspruch 4, bei welchem die Schmiereinrichtung unter den folgenden Einrichtungen bzw. Mitteln gewählt ist:
a) eine Beschichtung zur Dauerschmierung auf mindestens einer der jeweiligen Berührungsflächen des Verbindungsflansches (2) und des Fußes (4),
b) ein zwischengeschaltetes Schmierteil zwischen den jeweiligen Berührungsflächen des Verbindungsflansches (2) und des Fußes (4), und
c) Verwendung eines selbstschmierenden Metalls zur Bildung von mindestens einer der jeweiligen Berührungsflächen des Verbindungsflansches (2) und des Fußteils (4).

6. Längliches Befestigungselement nach einem der Ansprüche 1 bis 5, bei welchem das Kopfteil (1) einen hohlen Querschnitt aufweist.

7. Längliches Befestigungselement nach einem der Ansprüche 1 bis 6, bei welchem das Unterteil (3) des Verbindungsflansches (2) einen hohlen Querschnitt aufweist.

8. Längliches Befestigungselement nach einem der Ansprüche 1 bis 7, bei welchem es sich bei dem einzelnen Element (1, 2, 3) um ein extrudiertes Element handelt.

9. Längliches Befestigungselement nach einem der Ansprüche 1 bis 8, bei welchem der Fuß ein extrudiertes Element ist.

10. Baugruppe, welche mindestens eine Bauplatte und mindestens ein längliches Befestigungselement nach einem der Ansprüche 1 bis 9 aufweist, welches mit der Bauplatte so in Eingriff steht, dass diese auf einer Tragkonstruktion gesichert wird.

## Revendications

1. Elément de retenue allongé pour tôles de construction, comprenant un composant mobile (1, 2, 3) et une base (4) pour monter l'élément de retenue sur une structure de support, le composant mobile comprenant, vu en coupe transversale perpendiculaire au sens de sa longueur, une partie formant tête (1) pour coopérer avec au moins une dite tôle de construction, une aile de liaison (2), et une partie de base (3), ladite aile de liaison (2) s'étendant vers le haut depuis ladite base (4) et reliant ladite partie formant tête (1) à ladite base (4), ladite partie de base (3) reliant ladite aile (2) à ladite base (4) et permettant un mouvement longitudinal de ladite aile et de ladite partie formant tête par rapport à ladite base dans le sens de la longueur de l'élément de retenue et une rotation de ladite aile et de ladite partie formant tête par rapport à ladite base autour d'un axe parallèle audit sens de la longueur de l'élément de retenue, **caractérisé en ce que** ladite partie formant tête (1), ladite aile de liaison (2) et ladite partie de base (3) forment un seul élément, et ladite base (4) comporte une pièce d'emboîtement destinée à recevoir ladite partie de base (3), ladite partie de base et ladite pièce d'emboîtement ayant toutes deux une forme circulaire partielle, en vue en coupe transversale perpendiculaire au sens de la longueur de l'élément de retenue, et ladite partie de base (3) permettant un mouvement de glissement longitudinal libre de ladite aile (2)par rapport à ladite base (4) dans le sens de la longueur de l'élément de retenue et une rotation sur un arc prédéterminé entre des positions de butée d'extrémité de ladite aile dans ladite pièce d'emboîtement de ladite base (4).

2. Elément de retenue allongé selon la revendication 1, dans lequel ladite pièce d'emboîtement a une entrée ouverte qui s'étend sur un arc compris entre -α° et +α° par rapport à une ligne radiale reliant le centre de rotation au centre de ladite entrée ouverte où α ne dépasse pas 15°.

3. Elément de retenue allongé selon la revendication 1 ou 2, dans lequel ledit arc prédéterminé est symétrique par rapport à un plan central de symétrie de l'élément de retenue.

4. Elément de retenue allongé selon l'une quelconque des revendications 1 à 3, dans lequel l'assemblage de ladite aile de liaison (2) avec ladite base (4) via ladite partie de base (3) comprend un moyen lubrifiant le mouvement relatif de ladite aile de liaison (2) et de ladite base (4).

5. Elément de retenue allongé selon la revendication 4, dans lequel ledit moyen lubrifiant est choisi parmi
(a) un revêtement lubrifiant permanent sur au moins l'une des surfaces de contact respectives de ladite aile de liaison (2) et de ladite base (4),
(b) un élément lubrifiant intermédiaire entre des surfaces de contact respectives de ladite aile de liaison (2) et de ladite base (4), et
(c) l'utilisation d'un métal autolubrifiant pour constituer au moins l'une des surfaces de contact respectives de ladite aile de liaison (2) et de ladite base (4).

6. Elément de retenue allongé selon l'une quelconque des revendications 1 à 5, dans lequel ladite partie formant tête (1) a une section creuse.

7. Elément de retenue allongé selon l'une quelconque des revendications 1 à 6, dans lequel ladite partie de base (3) de ladite aile de liaison (2) a une section creuse.

8. Elément de retenue allongé selon l'une quelconque des revendications 1 à 7, dans lequel ledit élément d'une seule pièce (1, 2, 3) est un élément extrudé.

9. Elément de retenue allongé selon l'une quelconque des revendications 1 à 8, dans lequel ladite base (4) est un élément extrudé.

10. Assemblage comprenant au moins une tôle de construction et au moins un élément de retenue allongé selon Tune quelconque des revendications 1 à 9 coopérant avec ladite tôle de construction pour la retenir sur une structure de support.
